# EUROPEAN PATENT SPECIFICATION

(11) **EP 3 702 748 B1**
(45) Date of publication and mention of the grant of the patent: **04.01.2023**
(21) Application number: 20159116.1
(22) Date of filing: 24.02.2020
(51) Int. Cl.: G01L 19/00, G01L 19/14

(54) **SENSOR UNIT FOR A HYDRAULIC CIRCUIT**
SENSORBAUGRUPPE FÜR EINEN HYDRAULIKKREIS
ENSEMBLE CAPTEUR POUR UN CIRCUIT HYDRAULIQUE

(30) Priority: 26.02.2019 DE 102019104873
(43) Date of publication of application: 02.09.2020
(73) Proprietor: FTE automotive GmbH, 96106 Ebern (DE)
(72) Inventor: SAUERTEIG, Frank, 96106 Ebern (DE)
(74) Representative: Valeo Powertrain Systems

(56) References cited:
- DE-A1-102014 222 115
- SU-A1- 1 492 156
- US-A1- 2010 252 491
- US-A1- 2018 149 539
- US-B1- 6 223 766

## Description

The invention relates to a sensor unit for a hydraulic circuit. The hydraulic circuit is a hydraulic circuit of a motor vehicle, by means of which, for example, a clutch, a brake or a steering system can be actuated.

In order to enable the accurate actuation of the component which is to be actuated in the desired manner, it is generally necessary for reliable information to be available with respect to the pressure in the hydraulic circuit. In some applications, the detection of temperature may also be desirable. In principle, appropriate sensors for this purpose can be integrated in a housing of the transmitter component or the receiver component. However, this requires the corresponding adaptation of the housing in each case.

A sensor unit, as defined in the preamble of claim 1, is known from DE 10 2014 222 115 A1, which measures the flow in a hydraulic line. To this end, the sensor unit is incorporated in the hydraulic line, such that the hydraulic flow sets a measuring wheel in motion. Although this is not specifically emphasized, the impression is given that the sensor unit described in this document can be arranged, in a flexible manner, at a desired location in the hydraulic circuit.

Further state of the art is known from US 2010/252491 A1, US 6 223 766 B1 , US 2018/149539 A1 and SU 1 492 156 A1.

The object of the present invention is the provision of a sensor unit which is characterized by even greater flexibility and variability, as defined in the appended independent claim 1.

For the fulfilment of this object, according to the invention, a sensor unit is provided, having a hydraulic housing which comprises a fluid inlet, a fluid outlet and a fluid duct between the fluid inlet and the fluid outlet, wherein the fluid inlet and the fluid outlet are configured as quick couplings, and having a sensor housing in which a sensor element is accommodated, and which is fitted to the hydraulic housing such that the sensor element is assigned to the fluid duct, wherein the sensor housing is detachably mounted on the hydraulic housing and comprises a plug connection, into which a plug element can be inserted, by means of which a signal of the sensor element can be transmitted. The invention is based upon a fundamental concept, wherein the sensor unit is of a modular design, such that maximum flexibility is provided. The quick couplings permit the integration thereof at any desired location in the hydraulic circuit wherein, moreover, if necessary replacement is possible in a very simple manner. As the sensor housing is configured separately from the hydraulic housing, it can be adapted to the respective sensor element, if necessary, with limited complexity, wherein the modification of the hydraulic housing is not necessary. The plug connection can be of a standardized configuration such that, with limited complexity, a cable of the on-board electrical system can be connected.

The quick couplings are preferably configured as sockets, into which matching mating components of the hydraulic line can be inserted with limited complexity. It is also possible for both quick couplings to be configured as jacks, onto which socket-type mating components, which are provided on the hydraulic lines, are plugged. It is also possible for one of the quick couplings to be configured as a socket, and the other as a jack.

In order to permit the reliable engagement of the mating components of the hydraulic line in the quick couplings, the latter preferably incorporate a locking clamp, by means of which a plug element of a hydraulic line can be locked onto a fluid inlet or fluid outlet.

According to one configuration of the invention, it is provided that a branch from the fluid duct leads to a measuring chamber, in which the sensor element is arranged. The sensor element is thus directly exposed to the hydraulic fluid, and measuring accuracy is improved accordingly.

Preferably, a seal is arranged between the sensor element and a wall of the measuring chamber, which surrounds the opening of the branch into the measuring chamber. This constitutes a first seal for the hydraulic circuit.

The sensor element can be latched into the sensor housing. It can thus be pre-fitted in the sensor housing, such that it cannot become detached during the fitting of the sensor housing to the hydraulic housing.

The sensor housing preferably accommodates a plurality of electrically conductive terminal contacts, in particular by way of a press-fit arrangement. The terminal contacts can also be fitted to the sensor housing retrospectively, such that it is not necessary for them to be embedded therein. This reduces manufacturing costs.

The terminal contacts preferably engage with the signal outputs of the sensor element in an elastically pre-tensioned arrangement. This ensures a reliable contact connection of the signal outputs of the sensor element over the entire service life of the sensor unit.

The sensor housing is preferably screwed to the hydraulic housing in one of a plurality of potential orientations. As a result, the outgoing direction of the cable, relative to the direction of the hydraulic line, can be adapted to the respective conditions of use. For example, the cable can run parallel to the hydraulic line, or the cable can be brought out at an angle of 90°, relative to the hydraulic line.

According to one configuration, a seal is provided, which constitutes a seal between the sensor housing and the hydraulic housing. A second seal is thus provided between the sensor housing and the hydraulic housing, such that any escape of hydraulic fluid from the circuit is reliably prevented.

In principle, the sensor element can be selected in accordance with requirements. However, this is preferably a digital sensor, such that a particularly high measuring accuracy is achieved.

According to the claimed invention, the sensor element is a pressure sensor, in which a temperature sensor is also integrated.

The invention is described hereinafter with reference to an exemplary embodiment, which is represented in the attached drawings. In the drawings:

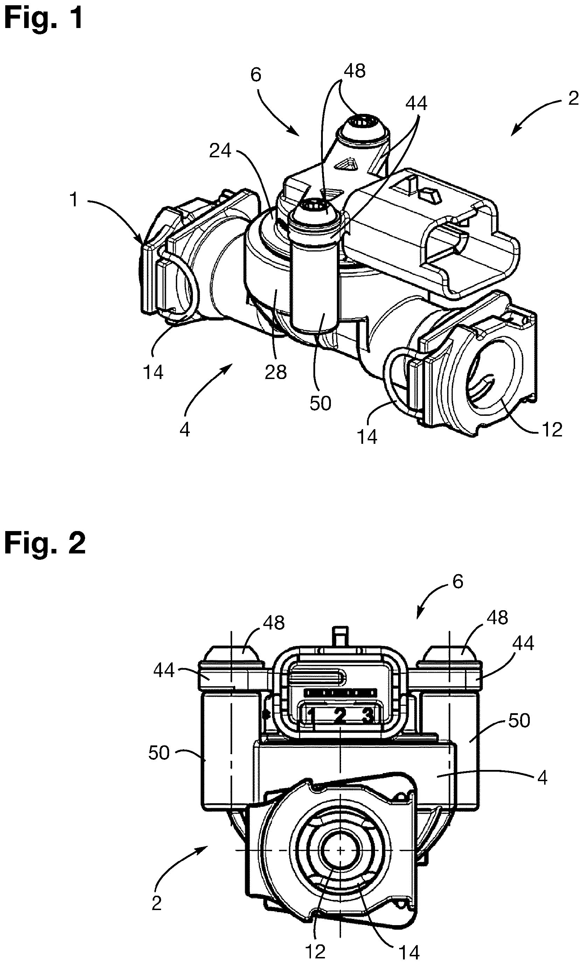

- Figure 1 shows a sensor unit according to the invention, in a perspective view;
- Figure 2 shows the sensor unit according to Figure 1, in a front view;
- Figure 3 shows the sensor unit according to Figure 1, wherein a plug element is inserted in a plug connection of the sensor housing;
- Figure 4 shows a perspective overhead view of the sensor unit according to Figure 1;

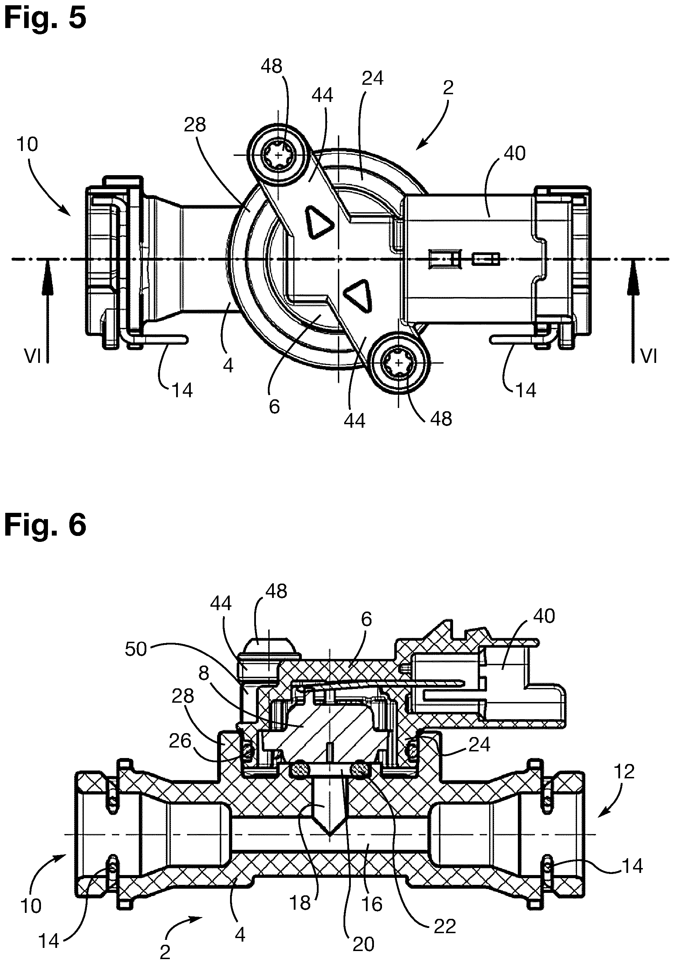

- Figure 5 shows an underside view of the sensor unit according to Figure 1;
- Figure 6 shows a sectional view along plane VI-VI in Figure 5;
- Figure 7 shows a sectional view of the sensor housing of the sensor unit according to Figure 1;
- Figure 8 shows a sectional view along plane VIII-VIII in Figure 7;
- Figure 9 shows an underside view of part of the sensor housing of the sensor unit according to Figure 7;
- Figure 10 shows a sectional view along plane X-X in Figure 9;
- Figure 11 shows a view corresponding to that represented in Figure 9, wherein a sensor element is inserted in the sensor housing;
- Figure 12 shows a sectional view along plane XII-XII in Figure 11; and
- Figure 13 shows a detailed view of section XIII in Figure 7.

In the figures, a sensor unit 2 is represented, which comprises a hydraulic housing 4 and a sensor housing 6.

The hydraulic housing is designed to be arranged in a hydraulic circuit. The hydraulic circuit, in particular, is a circuit between a transmitter and a receiver, wherein the receiver can be a release cylinder of a clutch, an actuating cylinder for a brake, or a similar component.

The function of the sensor housing 6 is the accommodation of a sensor element 8, by means of which a parameter of the hydraulic fluid in the hydraulic circuit can be detected, in particular pressure and/or temperature. The sensor element 8, in particular, is a digital sensor.

According to the claimed invention, both the hydraulic housing 4 and the sensor housing 6 are comprised of plastic. In particular, they are injection-moulded.

The hydraulic housing 4 comprises a fluid inlet 10 and a fluid outlet 12, both of which are configured as quick couplings. The term "quick coupling" signifies that a plug element of a hydraulic line can be connected to the fluid inlet 10 or the fluid outlet 12 in a pressure-tight and leakage-free manner, without the necessity of a tool for this purpose, and that this connection can also be released thereafter, without the use of a tool.

In the exemplary embodiment represented, the fluid inlet 10 and the fluid outlet 12 are configured as sockets, to each of which a locking clamp 14 is assigned. The locking clamp 14 can latch into a slot or a similar structure of the plug element of the hydraulic line, and can also release the latter, when the locking clamp is actuated.

A fluid duct extends through the hydraulic housing 4 between the fluid inlet 10 and the fluid outlet 12, through which the hydraulic fluid can flow, in the hydraulic circuit in which the sensor unit 2 is arranged.

The designations of the quick couplings as an input and an output have been selected here in the interests of clarity only. These are openings in the hydraulic housing through which, depending upon the application and the actuating state, the hydraulic fluid can flow in and flow back out again.

A branch 18 taps off from the fluid duct 16, which leads to a measuring chamber 20. The sensor element 8 is arranged in the measuring chamber 20, such that it is directly exposed to the hydraulic fluid.

A seal 22, for example an O-ring, is arranged around the opening of the branch 18 into the measuring chamber 20, which constitutes a seal between the hydraulic housing 4 and the sensor element 8.

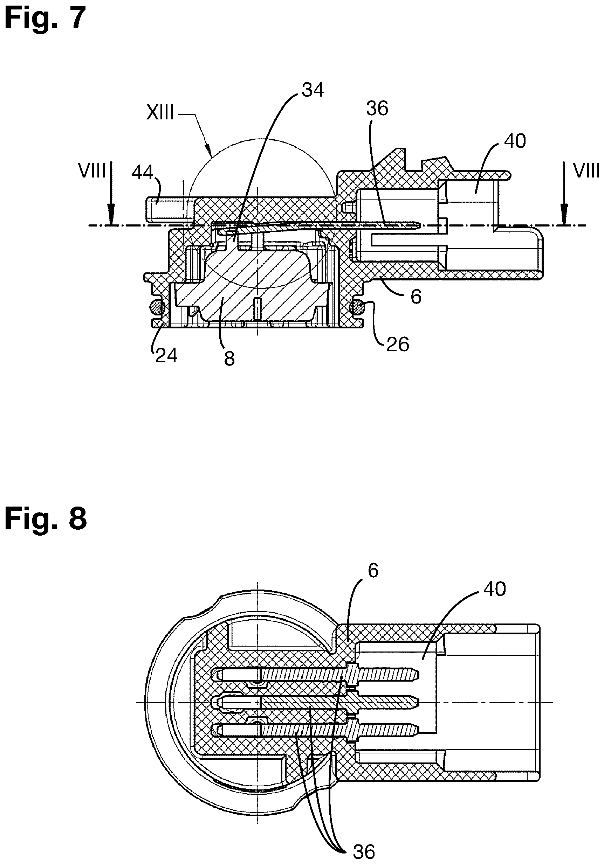

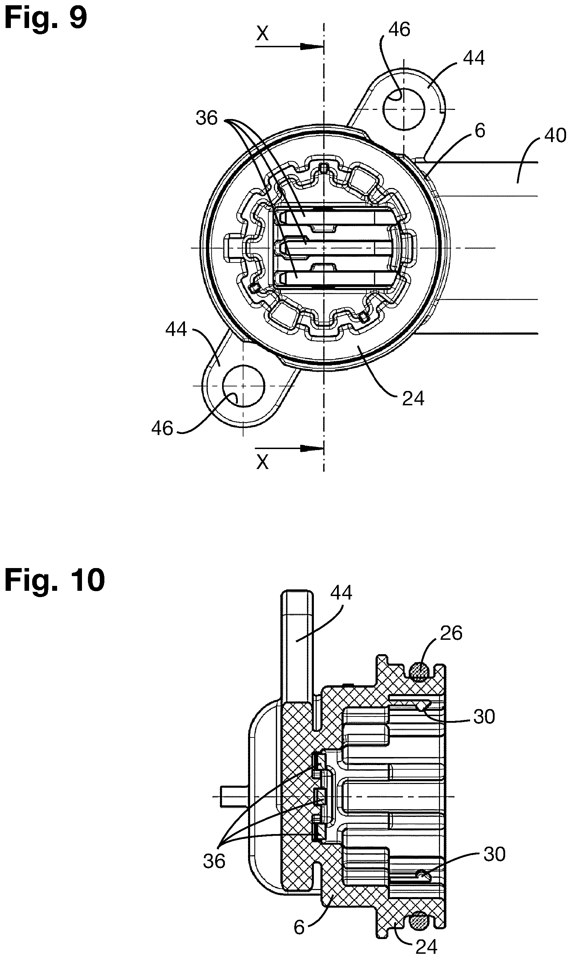

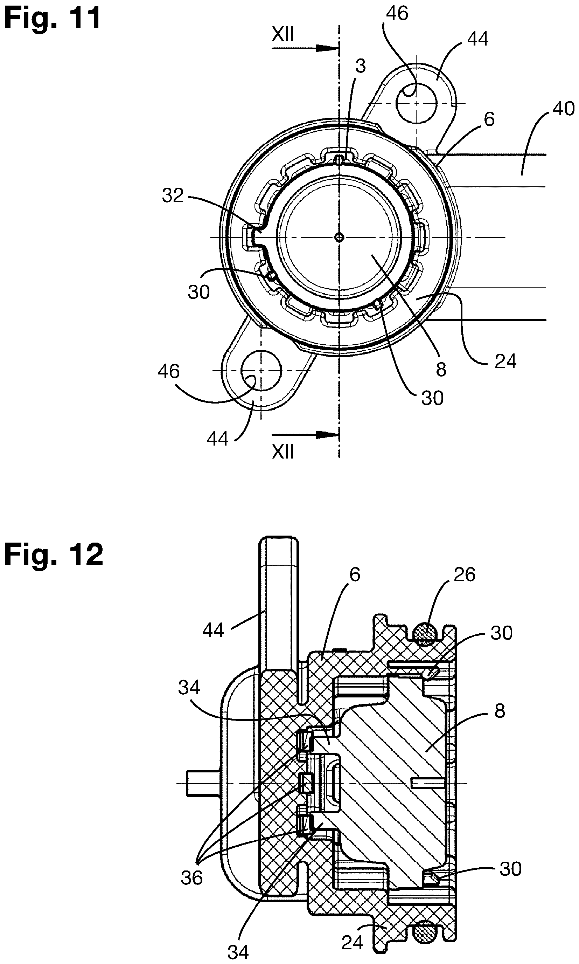

The sensor element 8 is accommodated in a socket-shaped fitting 24 of the sensor housing 6 (c.f. in particular Figures 7 to 12). On the outer surface of the socket-shaped fitting 24, a seal 26, for example an O-ring, is arranged, which constitutes a seal against an inner wall of a likewise annular locator 28, which is configured integrally with the hydraulic housing 4, and the function of which is the accommodation of the sensor housing 6 on the hydraulic housing 4.

In the interior of the socket-shaped fitting 24, a plurality of latching lugs 30 are arranged, by means of which the sensor element 8 can be pre-fitted in the sensor housing 6.

The sensor element 8 is provided with a positioning projection 32, which ensures that it can only be fitted in the sensor housing 6 with a predefined orientation.

On the reverse side thereof, i.e. the side which, in the assembled state, is averted from the measuring chamber 20, the sensor element 8 is provided with a plurality of signal outputs 34, the function of which is the electrical contact connection of the sensor element 8. The term "signal output", in this context, is the overall term for all the electrical connections of the sensor element 8, i.e. both for the supply of electric power and for the transmission of sensor signals.

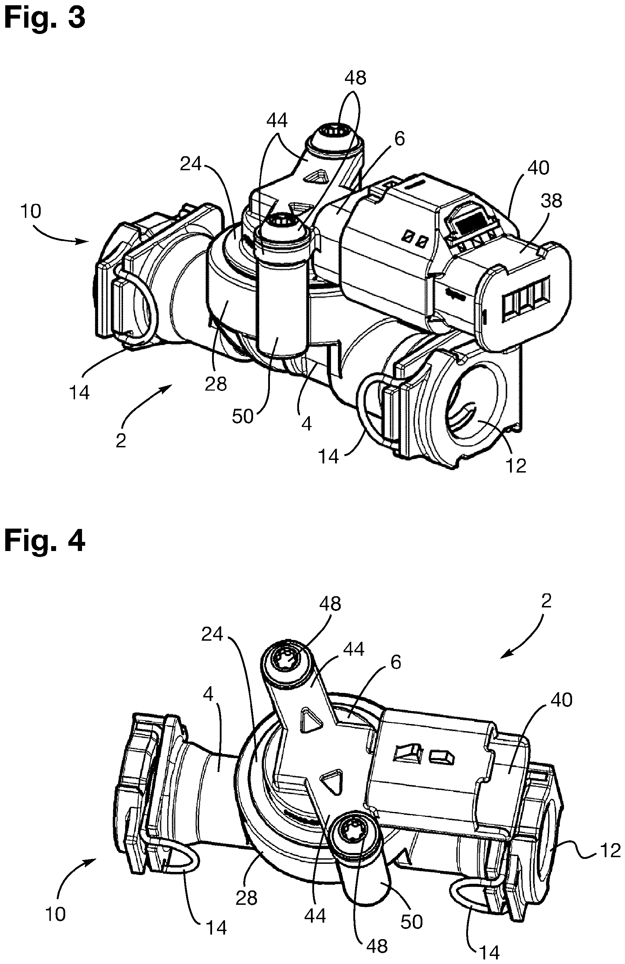

In the sensor housing 6, a plurality of electrically conductive terminal contacts 36 are accommodated, the function of which is to connect the sensor element 8 to a plug element 38 (see Figure 3). The plug element 38 is plugged into a plug connection 40, which is integrally configured with the sensor housing 6 and constitutes a plug-in chamber for the plug element. In the interior of the plug connection, one end of the terminal contacts 36 is exposed, such that the latter is electrically contact-connected upon the insertion of the plug element 38.

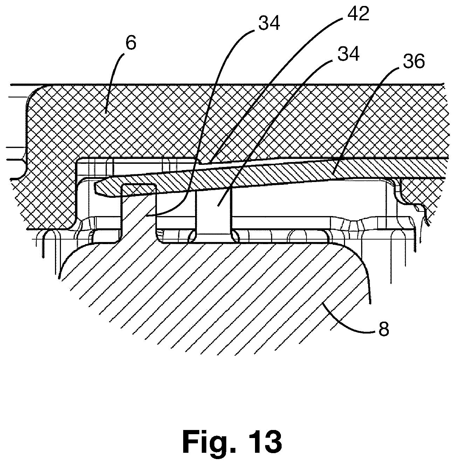

The ends of the terminal contacts 36, which are positioned in opposition to the end thereof which is arranged in the plug connection 40, are exposed in the interior of the fitting 24. The ends are thus elastically pre-tensioned against the signal outputs 34 of the sensor element 8. This can be achieved, either wherein the terminal contacts 36 themselves sustain appropriate plastic deformation, such that the desired pre-tensioning is achieved, or wherein the terminal contacts 36 are appropriately compressed against the sensor element 8 by a material wedge 42 (see Figure 13), which is integrated in the sensor housing 6.

The terminal contacts 36 are accommodated in the sensor housing 6 by the press-fitting thereof into appropriate openings, once the sensor housing 6 has been injection-moulded.

Once the sensor element 8 has been pre-fitted in the sensor housing 6, the sensor housing 6 can be fitted to the hydraulic housing 4. To this end, the fitting 24 thereof is inserted in the locator 28. For fixing purposes, in the exemplary embodiment represented, the sensor housing 6 comprises two fixing lugs 44, each of which is provided with an opening 46 for a fixing screw 48.

The fixing screws 48 are screwed into abutments 50, which are integrally configured with the hydraulic housing 4.

In the exemplary embodiment represented, two abutments 50 and two fixing lugs 44 are employed, which are arranged in diametrical opposition to one another with respect to the centre line of the fitting 24. Accordingly, there are two possible positions in which the sensor housing 6 can be accommodated relative to the hydraulic housing 4.

It is also conceivable for a total of four abutments to be employed, which are arranged at an angle of 90° to one another. In this case, four orientations of the sensor housing 6 relative to the hydraulic housing 4 would be possible wherein, in two orientations, the cable outlet runs parallel to the fluid duct 16 and, in two further orientations, is perpendicular thereto.

## Claims

1. Sensor unit (2) for a hydraulic circuit of a motor vehicle, the sensor unit (2) having a hydraulic housing (4), which comprises a fluid inlet (10), a fluid outlet (12) and a fluid duct (16) between the fluid inlet (10) and the fluid outlet (12), wherein the fluid inlet (10) and the fluid outlet (12) are configured as quick couplings, and having a sensor housing (6) in which a sensor element (8) is accommodated, and which is fitted to the hydraulic housing (4) such that the sensor element (8) is assigned to the fluid duct (16), wherein the sensor housing (6) is detachably mounted on the hydraulic housing (4) and comprises a plug connection (40), into which a plug element (38) can be inserted, by means of which a signal of the sensor element (8) can be transmitted **characterized in that** the sensor element (8) is a pressure sensor, in which a temperature sensor is also integrated and **in that** both the hydraulic housing (4) and the sensor housing (6) are comprised of plastic.

2. Sensor unit (2) according to Claim 1, **characterized in that** the quick couplings are configured as sockets.

3. Sensor unit (2) according to Claim 1 or Claim 2, **characterized in that** the quick couplings incorporate a locking clamp (14), by means of which a plug element of a hydraulic line can be locked onto a fluid inlet (10) or fluid outlet (12).

4. Sensor unit (2) according to one of the preceding claims, **characterized in that** a branch (18) from the fluid duct (16) leads to a measuring chamber (20), in which the sensor element (8) is arranged.

5. Sensor unit (2) according to Claim 4, **characterized in that** a seal (22) is arranged between the sensor element (8) and a wall of the measuring chamber (20), which surrounds the opening of the branch (18) into the measuring chamber (20).

6. Sensor unit (2) according to one of the preceding claims, **characterized in that** the sensor element (8) is latched into the sensor housing (6).

7. Sensor unit (2) according to one of the preceding claims, **characterized in that** a plurality of electrically conductive terminal contacts (36) are accommodated in the sensor housing (6), in particular by way of a press-fit arrangement.

8. Sensor unit (2) according to Claim 7, **characterized in that** the terminal contacts (36) engage with the signal outputs (34) of the sensor element (8) in an elastically pre-tensioned arrangement.

9. Sensor unit (2) according to one of the preceding claims, **characterized in that** the sensor housing (6) is screwed to the hydraulic housing (4) in one of a plurality of potential orientations.

10. Sensor unit (2) according to one of the preceding claims, **characterized in that** a seal (26) is provided, which constitutes the seal between the sensor housing (6) and the hydraulic housing (4).

11. Sensor unit (2) according to one of the preceding claims, **characterized in that** the sensor element (8) is a digital sensor.

## Patentansprüche

1. Sensoreinheit (2) für einen Hydraulikkreislauf eines Kraftfahrzeugs, wobei die Sensoreinheit (2) ein Hydraulikgehäuse (4) aufweist, das einen Fluideinlass (10), einen Fluidauslass (12) und eine Fluidleitung (16) zwischen dem Fluideinlass (10) und dem Fluidauslass (12) umfasst, wobei der Fluideinlass (10) und der Fluidauslass (12) als Schnellkopplungen ausgelegt sind, und ein Sensorgehäuse (6) aufweist, in dem ein Sensorelement (8) untergebracht ist und das an dem Hydraulikgehäuse (4) angebracht ist, dergestalt, dass das Sensorelement (8) der Fluidleitung (16) zugewiesen ist, wobei das Sensorgehäuse (6) ablösbar an dem Hydraulikgehäuse (4) angebracht ist und eine Steckverbindung (40) umfasst, in die ein Steckerelement (38) eingefügt werden kann, mittels dessen ein Signal des Sensorelements (8) übertragen werden kann, **dadurch gekennzeichnet, dass** das Sensorelement (8) ein Drucksensor ist, worin auch ein Temperatursensor integriert ist, und dass sowohl das Hydraulikgehäuse (4) als auch das Sensorgehäuse (6) aus Kunststoff bestehen.

2. Sensoreinheit (2) nach Anspruch 1, **dadurch gekennzeichnet, dass** die Schnellkopplungen als Buchsen ausgelegt sind.

3. Sensoreinheit (2) nach Anspruch 1 oder Anspruch 2, **dadurch gekennzeichnet, dass** die Schnellkopplungen eine Verriegelungsklammer (14) enthalten, mittels derer ein Steckerelement einer Hydraulikleitung an einem Fluideinlass (10) oder Fluidauslass (12) verriegelt werden kann.

4. Sensoreinheit (2) nach einem der vorhergehenden Ansprüche, **dadurch gekennzeichnet, dass** ein Zweig (18) von der Fluidleitung (16) zu einer Messkammer (20) führt, in der das Sensorelement (8) angeordnet ist.

5. Sensoreinheit (2) nach Anspruch 4, **dadurch gekennzeichnet, dass** eine Dichtung (22) zwischen dem Sensorelement (8) und einer Wand der Messkammer (20), die die Öffnung des Zweigs (18) in die Messkammer (20) umgibt, angeordnet ist.

6. Sensoreinheit (2) nach einem der vorhergehenden Ansprüche, **dadurch gekennzeichnet, dass** das Sensorelement (8) in das Sensorgehäuse (6) eingerastet ist.

7. Sensoreinheit (2) nach einem der vorhergehenden Ansprüche, **dadurch gekennzeichnet, dass** mehrere elektrisch leitfähige Anschlusskontakte (36) insbesondere mittels einer Presspassanordnung in dem Sensorgehäuse (6) untergebracht sind.

8. Sensoreinheit (2) nach Anspruch 7, **dadurch gekennzeichnet, dass** die Anschlusskontakte (36) in einer elastisch vorgespannten Anordnung mit den Signalausgängen (34) des Sensorelements (8) in Eingriff treten.

9. Sensoreinheit (2) nach einem der vorhergehenden Ansprüche, **dadurch gekennzeichnet, dass** das Sensorgehäuse (6) in einer von mehreren potenziellen Orientierungen an das Hydraulikgehäuse (4) geschraubt ist.

10. Sensoreinheit (2) nach einem der vorhergehenden Ansprüche, **dadurch gekennzeichnet, dass** eine Dichtung (26) vorgesehen ist, die die Dichtung zwischen dem Sensorgehäuse (6) und dem Hydraulikgehäuse (4) bildet.

11. Sensoreinheit (2) nach einem der vorhergehenden Ansprüche, **dadurch gekennzeichnet, dass** das Sensorelement (8) ein digitaler Sensor ist.

## Revendications

1. Unité de capteur (2) pour un circuit hydraulique d'un véhicule à moteur, l'unité de capteur (2) ayant un boîtier hydraulique (4), qui comprend une entrée de fluide (10), une sortie de fluide (12) et un conduit de fluide (16) entre l'entrée de fluide (10) et la sortie de fluide (12), l'entrée de fluide (10) et la sortie de fluide (12) étant configurées comme raccords rapides, et ayant un boîtier de capteur (6) dans lequel un élément capteur (8) est logé, et lequel est adapté au boîtier hydraulique (4) de telle sorte que l'élément capteur (8) est attribué au conduit de fluide (16), le boîtier de capteur (6) étant monté de manière amovible sur le boîtier hydraulique (4) et comprenant un raccordement par enfichage (40), dans lequel un élément fiche (38) peut être inséré, au moyen duquel un signal de l'élément capteur (8) peut être transmis, **caractérisée en ce que** l'élément capteur (8) est un capteur de pression, dans lequel un capteur de température est également intégré et **en ce que** le boîtier hydraulique (4) et le boîtier de capteur (6) sont constitués tous les deux de plastique.

2. Unité de capteur (2) selon la revendication 1, **caractérisée en ce que** les raccords rapides sont configurés comme des douilles.

3. Unité de capteur (2) selon la revendication 1 ou la revendication 2, **caractérisée en ce que** les raccords rapides comprennent un dispositif de serrage à verrouillage (14), au moyen duquel un élément fiche d'une ligne hydraulique peut être verrouillé sur une entrée de fluide (10) ou une sortie de fluide (12).

4. Unité de capteur (2) selon l'une des revendications précédentes, **caractérisée en ce qu'**une branche (18) provenant du conduit de fluide (16) amène à une chambre de mesure (20), dans laquelle l'élément capteur (8) est disposé.

5. Unité de capteur (2) selon la revendication 4, **caractérisée en ce qu'**un joint (22) est disposé entre l'élément capteur (8) et une paroi de la chambre de mesure (20), qui entoure l'ouverture de la branche (18) dans la chambre de mesure (20).

6. Unité de capteur (2) selon l'une des revendications précédentes, **caractérisée en ce que** l'élément capteur (8) est bloqué dans le boîtier de capteur (6).

7. Unité de capteur (2) selon l'une des revendications précédentes, **caractérisée en ce qu'**une pluralité de contacts de borne (36) conducteurs électriquement sont logés dans le boîtier de capteur (6), particulièrement au moyen d'un arrangement à ajustement par pression.

8. Unité de capteur (2) selon la revendication 7, **caractérisée en ce que** les contacts de borne (36) s'emboitent avec les sorties de signal (34) de l'élément capteur (8) dans un arrangement pré-tendu élastiquement.

9. Unité de capteur (2) selon l'une des revendications précédentes, **caractérisée en ce que** le boîtier de capteur (6) est vissé au boîtier hydraulique (4) dans l'une d'une pluralité d'orientations potentielles.

10. Unité de capteur (2) selon l'une des revendications précédentes, **caractérisée en ce qu'**un joint (26) est fourni, qui constitue le joint entre le boîtier de capteur (6) et le boîtier hydraulique (4).

11. Unité de capteur (2) selon l'une des revendications précédentes, **caractérisée en ce que** l'élément capteur (8) est un capteur numérique.
